# EUROPÄISCHE PATENTSCHRIFT

(11) **EP 1 904 711 B1**
(45) Veröffentlichungstag und Bekanntmachung des Hinweises auf die Patenterteilung: **06.04.2011**
(21) Anmeldenummer: 06775705.4
(22) Anmeldetag: 14.07.2006
(51) Int. Cl.: E06B 9/40, E06B 9/60, B60J 1/20

(54) **WICKELWELLE FÜR EINE ROLLOVORRICHTUNG**
WINDING SHAFT FOR A ROLLER BLIND DEVICE
ARBRE D'ENROULEMENT POUR UN SYSTEME DE STORE

(30) Priorität: 15.07.2005 DE 102005033275
(43) Veröffentlichungstag der Anmeldung: 02.04.2008
(73) Patentinhaber: Webasto AG, 82131 Stockdorf (DE)
(72) Erfinder: GLASL, Sebastian, 81549 München (DE)
(74) Vertreter: Grünberg, Thomas
(86) Internationale Anmeldenummer: PCT/DE2006/001225
(87) Internationale Veröffentlichungsnummer: WO 2007/009438

(56) Entgegenhaltungen:
- EP-A1- 1 122 400
- DE-U1- 20 116 309
- FR-A- 1 070 257
- FR-A- 1 163 320
- FR-A- 2 010 004
- US-A- 1 900 259
- US-A- 1 938 729

## Beschreibung

Die Erfindung betrifft eine Wickelwelle für eine Rollovorrichtung, insbesondere für Kraftfahrzeuge nach dem Oberbegriff des Anspruchs 1.

Aus der FR 1 163 320 A ist eine Wickelwelle für eine Rollovorrichtung bekannt. Diese Wickelwelle umfasst ein Wickelrohr und eine in dem Wickelrohr angeordnete Torsionsfeder, die ein automatisches Aufrollen einer Rollobahn auf die Wickelwelle bewirkt. Die Torsionsfeder ist mit einem ersten Ende gegenüber dem Wickelrohr verdrehbar. Mit ihrem zweiten Ende greift die Torsionsfeder in ein Gleitelement ein, das drehfest gegenüber dem Wickelrohr und axial verschieblich gegenüber diesem angeordnet ist.

Aus der US 1,900,259 A ist eine Wickelwelle für ein Rollo bekannt, die ein Wickelrohr umfasst, in welchem eine Wickelfeder angeordnet ist. Die Wickelfeder ist mit einem Ende über ein Gleitstück drehfest mit dem Wickelrohr verbunden. Das andere Ende der Wickelfeder ist mit einem Lagerelement für die wickelwelle verbunden, so dass es gegenüber dem Wickelrohr verdrehbar ist.

Aus der FR 2 010 004 A ist ebenfalls eine Wickelwelle für ein Rollo bekannt, die ein wickelrohr aufweist, in welchem eine Wickelfeder angeordnet ist, die einerseits über ein Gleitstück drehfest mit dem Wickelrohr verbunden ist und andererseits mit einem Lagerelement für die Wickelwelle verbunden ist, so dass dieses Ende der wickelfeder gegenüber dem Wickelrohr drehbar ist.

Ferner ist aus der DE 196 40 846 A1 eine Rollowelle zum Auf- und Abrollen eines flexiblen Flächengebildes bekannt, wobei die Rollowelle endseitig um ihre Längsachse drehbar in Seitenteilen gelagert ist. Im Inneren der Rollowelle ist eine Torsionsspiralfeder angeordnet welche sich von einem ebenfalls im Inneren der Rollowelle angeordneten Haltering bis zu einem bezüglich der Rollowelle endseitig angeordneten Drehelement erstreckt. Die Torsionsspiralfeder ist jeweils über Stützzapfen drehfest mit dem Drehelement und dem Haltering verbunden. Der Haltering ist bezüglich der Rollowelle drehfest und axialfest mittels Eindrückungen in der Rollowelle fixiert. Durch das Abwickeln einer Rollobahn von einer solchen Rollowelle wird die Torsionsspiralfeder vorgespannt, so dass ein Drehmoment in einer Aufwickelrichtung auf die abgewickelte Rollobahn ausgeübt werden kann. Die Torsionsspiralfeder ist in einer Mandelhülle angeordnet, welche ebenfalls innerhalb der Rollowelle angeordnet ist. Zur Geräuschminimierung wird vorgeschlagen, die Torsionsspiralfeder derart in deren axialer Längsrichtung vorgespannt einzubauen, dass in jedem Betriebszustand der Torsionsspiralfeder sichergestellt ist, dass aufeinanderfolgende Spiralwindungen nicht aufeinander zu liegen kommen und somit durch Vermeidung von Reibgeräuschen der Bediengeräuschpegel reduziert ist. Bei einer derartigen Rollowelle ist von Nachteil, dass die Geräuschentwicklung bei der Bedienung der Rollowelle nicht optimal ist. Außerdem entsteht durch die Festlegung des Halterings in der Rollowelle mittels Durchdrückungen ein unrunder Lauf der Rollowelle, was zusätzlichen Richtaufwand und zusätzliche Messschritte zur Ermittlung der Unrundheit der Rollowelle zur Folge hat.

Aus der DE 42 11 940 A1 ist eine Federwelle bekannt, bei der ein Schraubenrotationsfeder vorgesehen ist, die mit mindestens einem Ende mit einer Buchse dadurch gekoppelt ist, dass die Federdrahtgänge in ein angepasstes Außengewinde dieser Buchse teilweise eingreifen. Anderendig ist die Schraubenrotationsfeder mit einer weiteren Buchse drehfest gekoppelt, der Durchmesser der Schraubenrotationsfeder ist dabei so gewählt, dass im Inneren der Schreibenrotationsfeder ein Antriebsmotor angeordnet werden kann. Eine derartige Federwelle ist kompliziert im Aufbau und außerdem hinsichtlich der Geräuschentwicklung nicht ausreichend leise.

Aus der EP 1 009 904 B1 ist ein Aufwickelmechanismus für Rollos bekannt, bei dem eine Spiraltorsionsfeder ein Drehmoment auf die Wickelwelle zum Aufwickeln der Rollobahn ausübt. Die freie Drehbarkeit der Rollowelle ist durch reibungserzeugende Maßnahmen, z. B. eine mittels einer Druckfeder vorgespannt auf einem Gewinde laufende Nuss beeinflussbar, so dass ein kontrolliertes Anheben und Anhalten des Rollos in seiner oberen Position ermöglicht wird. Bei diesem Wickelmechanismus ist von Nachteil, dass diese ebenfalls unerwünschte Geräusche erzeugt und zudem kompliziert aufgebaut ist.

Aus der DE 200 11 452 U1 ist eine Wickelwelle für ein Rollo bekannt, welche eine Rolloachse und ein auf der Rolloachse drehbar gelagertes Wickelrohr besitzt, auf dem der Rollobehang auf- und abwickelbar ist. Um die Rolloachse herum ist eine gewickelte Spiralfeder als Spiraltorsionsfeder angeordnet, die mit einem Ende an der Rohrachse und mit dem anderen Ende an dem Wickelrohr befestigt ist. Zur Geräuschdämpfung wird vorgeschlagen, zwischen dem Wickelrohr und der Spiralfeder eine geräuschdämpfende Schicht vorzusehen, um ein Anschlagen der Spiralfederwindungen an das Wickelrohr zu vermeiden. Die Geräuschentwicklung einer solchen Wickelwelle ist nicht befriedigend,

Aufgabe der Erfindung ist es, eine Wickelwelle für eine Rollovorrichtung anzugeben, welche im Betrieb geräuschoptimiert ist. Außerdem ist es Aufgabe der Erfindung, eine Wickelwelle anzugeben, welche einen optimierten Rundlauf besitzt, außerdem soll die Wickelwelle einfach und kostengünstig sowie robust herstellbar sein.

Außerdem sollen die Einzelteile mit möglichst kostengünstigen Herstellverfahren und aus möglichst kostengünstigen Materialien herstellbar sein.

Die Aufgabe mit einer Wickelwelle für eine Rollovorrichtung wird mit den Merkmalen des Anspruchs 1 gelöst. Vorteilhafte Weiterbildungen sind in den Unteransprüchen angegeben.

Im Folgenden wird die Erfindung anhand, der Zeichnung beispielhaft näher erläutert. Es zeigen:
Figur 1: schematisch einen Längsschnitt durch eine Wickelwelle;
Figur 2: einen Querschnitt durch die Wickelwelle gemäß Figur 1 entlang der Linie A-A.
Figur 3: eine Ausführungsform der erfindungsgemäßen Wickelwelle

Erfindungsgemäß wurde erkannt, dass sich eine Spiraltorsionsfeder beim Spannen bzw. Entspannen in Torsionsrichtung um deren Längsachse gleichzeitig eine Längenänderung in Axialrichtung erfährt. Bei einer Torsionsverspannung in Wickelrichtung der Spiraltorsionsfeder verlängert sich die Spiraltorsionsfeder mit jeder Umdrehung um etwa eine Drahtstärke des die Spiraltorsionsfeder bildenden Federdrahtes. Bei einer Torsionsverspannung in entgegengesetzter Richtung erfährt die Spiraltorsionsfeder eine entsprechende Verkürzung um eine Drahtstärke pro Umdrehung. Somit erfahren sämtliche Spiraltorsionsfedern bei Rollowellen aus dem Stand der Technik bei Betätigung der Rollowelle, 2. B. durch Abziehen der Rollobahn; eine axiale Verspannung innerhalb der Rollowelle, was die Feder gegebenenfalls zu Schwingungen und somit zur Geräuschemission anregen kann. Diese Geräuschentwicklung wird erfindungsgemäß dadurch vermieden, dass die Spiraltorsionsfeder in jedem Betriebszustand der Rollowelle in deren Längsrichtung unverspannt verbleibt. Dies wird dadurch erreicht, dass zumindesteine Lagerung der Spiraltorsionsfeder in Längsrichtung der Rollowelle axial verschieblich gelagert ist, so dass ein Längenausgleich im Betrieb erfolgen kann.

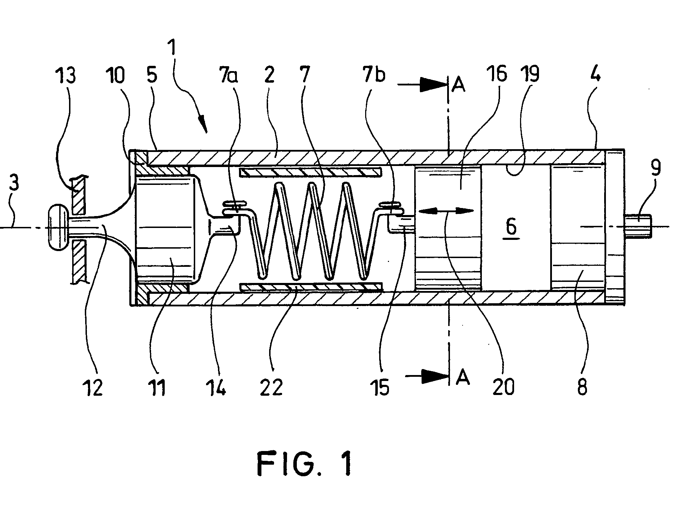

Eine Wickelwelle 1 (Figur 1) besitzt ein Wickelrohr 2. Auf dem Wickelrohr 2 ist eine Rollobahn (nicht gezeigt) auf- und abwickelbar angeordnet. Das Wickelrohr 2 besitzt eine Mittellängsachse 3, ein erstes freies Ende 4 und ein zweites freies Ende 5. In einem Innenraum 6 des wickelrohres 2 sitzt als Torsionsspanneinrichtung eine Spiraltorsionsfeder 7.

Im Bereich des ersten freien Endes 4 des Wickelrohres 2 ist ein Lagerstopfen 8 angeordnet, welcher bezüglich des Wickelrohres 2 drehfest und axialfest angeordnet ist. Der Lagerstopfen 8 besitzt einen Lagerzapfen 9, welcher in einem korrespondierenden Gegenlager (nicht gezeigt) drehbar gelagert ist.

Am gegenüberliegenden zweiten freien Ende 5 ist eine Lagerbuchse 10 drehfest und axialfest mit dem Wickelrohr 2 verbunden. Die Lagerbuchse 10 ist außenseitig im Keilwellen-, Vielzahn- oder Polygonprofil des Wickelrohres 2 drehfest und axialfest gelagert und bildet ein Gleitlager für das Lagerstück 11. Innerhalb der Lagerbuchse 10 ist ein Lagerstück 11 angeordnet, welches bezüglich der Lagerbuchse 10, d. h. somit auch bezüglich dem Wickelrohr 2, axialfest gelagert ist. Das Wickelrohr 2 ist bezüglich des Lagerstücks 11 drehbar gelagert. Das Lagerstück 11 besitzt beispielsweise einen Lagerzapfen 12, welcher sich ein Stück über das freie Ende 5 des Wickelrohres 2 in dessen Längsrichtung hinaus erstreckt und beispielsweise in einem Karosserieabschnitt 13 einer Fahrzeugkarosserie vorzugsweise drehfest und axialfest gelagert ist. Zweckmäßigerweise kann das Lagerstück 11 auch Teil eines Karosseriebereiches, z. B. Teil eines Aufnahmerahmens sein.

Anderendig besitzt das Lagerstück 11 eine Befestigungseinrichtung 14 für ein erstes Ende 7a der Spiraltorsionsfeder 7. Die Befestigungseinrichtung 14 des Lagerstücks 11 ragt bevorzugt in den Innenraum 6 des Wickelrohres 2 hinein. Ein zweites freies Ende 7b der Spiraltorsionsfeder 7 steht mit einer zweiten Befestigungseinrichtung 15 in Verbindung, wobei die zweite Befestigungseinrichtung 15 drehfest und axialfest mit einem Schubstück 16 verbunden ist.

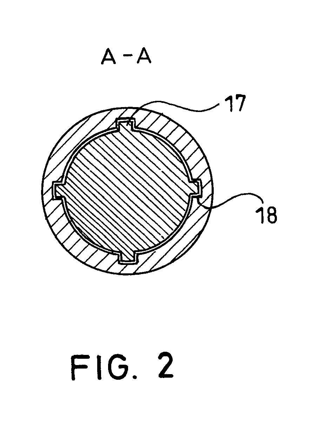

Das Schubstück 16 sitzt im Innenraum 6 des Wickelrohres 2 und ist mit diesem drehfest und axial verschieblich gekoppelt. Das Schubstück 16 besitzt beispielsweise außenumfänglich eine Vielzahl von Vorsprüngen 17 (vergleiche Figur 2), welche mit korrespondierenden Keilnuten 18 auf einer Innenseite 19 des Wickelrohres 2 korrespondieren. Die Keilnuten 18 können sich über die gesamte Länge des Wickelrohres 2 an dessen Innenseite erstrecken, so dass das Wickelrohr 2 besonders bevorzugt als Extrusionsbauteil, z. B. als Kunststoff-Extrusionsrohr oder als Stranggussprofil aus Aluminium, ausgebildet sein kann, was eine besonders günstige Herstellung des Wickelrohres 2 ermöglicht.

Das Schubstück 16 ist in jeder Betriebsstellung drehfest mit dem Wickelrohr 2 verbunden und zugleich in einer Doppelpfeilrichtung 20 parallel zur Erstreckung der Mittellängsachse 3 der Wickelwelle 1 verschieblich innerhalb des Wickelrohres 2 gelagert. Das Material des Schubstückes 16 und das Material des Wickelrohres 2 ist dabei zweckmäßigerweise derart aufeinander abgestimmt, dass auch bei einer drehverspannten Belastung des Schubstückes 16 eine leichte Verschieblichkeit des Schubstückes 16 bezüglich des Wickelrohres 2 sichergestellt ist. Gegebenenfalls ist für eine geeignete Schmierung gesorgt.

Wird nun beim Abwickeln bzw. Abziehen der Rollobahn von dem Wickelrohr 2 die Spiraltorsionsfeder 7 um deren Längsachse 3 tordierend gespannt, erfolgt, wie oben bereits erläutert, gleichzeitig eine Längung der Spiraltorsionsfeder 7, was eine Druckbelastung auf das Schubstück 16, in Figur 1 nach rechts, zur Folge hat. Dieser Druckbelastung weicht das Schubstück 16 durch ein Gleiten in den Keilnuten 18 des Wickelrohres 2 aus. Somit ist für eine in Axialrichtung verspannungsfreie Lagerung der Spiraltorsionsfeder 7 gesorgt. Beim Aufwickeln des Rollos mittels dem Wickelrohr 2 erfolgt gegenüber dem abgewickelten Zustand eine Verkürzung der Spiraltorsionsfeder 7, welche durch das Schubstück 16 durch Gleiten entlang der Doppelpfeilrichtung 20 - in Figur 1 nach links - ausgeglichen wird.

Zur Lagerung des Schubstücks 16 bezüglich dem Wickelrohr 2 sind sämtliche Anbindungen geeignet, welche eine drehfeste, jedoch axial verschiebliche Lagerung des Schubstücks 16 bezüglich des Wickelrohres 2 gewährleisten. Beispielhaft seien hier neben den bereits beschriebenen Keilwellenprofilen, Vielzahnprofile und/oder Polygonprofile erwähnt, wobei sich Vielzahnprofile in besonderer Art bewährt haben.

Weiterhin hat sich besonders bewährt, die Nuten 18 bzw. die korrespondierenden Vielzahnrillen und/oder Polygonlängsbahnen über die gesamte Länge des Wickelrohres 2, insbesondere der Innenseite des Wickelrohres 2 zu führen, wobei die Rillen, Bahnen bzw. Nuten auch zur drehfesten Festlegung des Lagerstopfens 8 und der Lagerbuchse 10 bezüglich des Wickelrohres 2 dienen können.

Gemäß einer besonders bevorzugten Ausführungsform ist im Bereich der Spiraltorsionsfeder, diese umgebend ein Dämpfungselement 22 angeordnet, welches im Betrieb der Wickelwelle 1 sicherstellt, dass Windungen der Spiraltorsionsfeder 7 nicht mit der Innenseite 19 des Wickelrohres 2 in Berührung gelangen und somit eine weiter verbesserte Akustik sichergestellt ist.

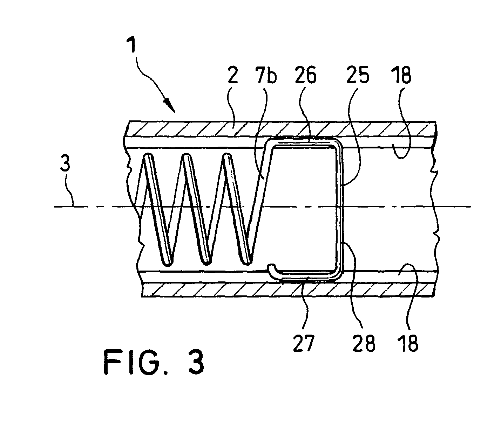

Gemäß einer besonders bevorzugten Ausführungsform (Figur 3) besitzt die Spiraltorsionsfeder 7 im Bereich ihres freien Endes 7b einen Lagerbügel 25, der bevorzugt einstückig aus dem Federdraht der Spiraltorsionsfeder 7 gebogen ausgebildet ist. Der Lagerbügel 25 besitzt einen ersten Lagerabschnitt 26 und einen zweiten Lagerabschnitt 27, welcher beispielsweise parallel zur Mittellängsachse 3 verlaufen und im zusammengebauten Zustand der Wickelwelle 1 in die Nuten 18 eingreifen. Die Lagerstege 26 und 27 sind mit einem Verbindungssteg 28 miteinander verbunden. Durch diese Ausführungsform ist ebenfalls eine drehfeste aber axial verschiebliche Lagerung des freien Endes 7b der Spiraltorsionsfeder 7 bezüglich dem Wickelrohr (2) gewährleistet. Besonders vorteilhaft bei dieser Ausführungsform ist, dass das Schubstück 16 hierbei entfallen kann.

Besonders vorteilhaft bei der Erfindung ist, dass die Spiraltorsionsfeder 7 in keiner Betriebsstellung eine axiale Vorspannung, d. h. weder eine Zugvorspannung noch eine Druckvorspannung erfährt, was zu einem besonders geräuscharmen Betrieb der erfindungsgemäßen Wickelwelle führt. Weiterhin ist von besonderem Vorteil, dass im Gegensatz zum Stand der Technik gemäß der DE 196 40 846 eine Verpressung des Schubstückes mit dem Wickelrohr nicht erfolgt, so dass nachteilige Einflüsse auf den Rundlauf, bzw. die Axialität des Wickelrohres durch das Verpressen vermieden sind. Somit sind aufwendige Rundlaufprüfungen und gegebenenfalls aufwendige und teuere Richtvorgänge zur Widerherstellung des Rundlaufes der Wickelwelle 1 vermieden. Weiterhin ist von Vorteil, dass für die erfindungsgemäße Wickelwelle ein Kunststoff-Extrusionsprofil verwendet werden kann, was eine besonders günstige, leichte und in der Montage einfach handhabbare Ausführung der Wickelwelle 1 gestattet.

Ein weiterer Vorteil ist, dass die Drehmomenteinleitung für das Aufwickeln der Rollobahn mittels der Wickelwelle 1 in einem mittigen Bereich des Wickelrohres 2 zwischen den endseitigen Lagerstopfen 8 und dem Lagerstück 11 erfolgt, was eine besonders gleichmäßige Aufwicklung zur Folge hat.

Ein weiterer Vorteil der Erfindung ist, dass die Länge der Spiraltorsionsfeder 7 bedarfsgerecht ausgelegt werden kann, ohne Einfluss auf andere Bauteile der Wickelwelle 1 zu nehmen. Dies rührt daher, dass das Schubstück 16 in Axialrichtung (Doppelpfeilrichtung 20) beliebig innerhalb des Wickelrohres 2 positionierbar ist.

Weiterhin ist von Vorteil, dass die Spiraltorsionsfeder 7 in Axialrichtung nicht vorgespannt werden muss, um einer Längenänderung bei Betätigung der Wickelwelle 1 entgegenzuwirken. Dies vermindert die Geräusche im Betrieb.

Weiterhin ist von Vorteil, dass die Lagerwelle 10 und insbesondere deren Lagerung im Karosserieabschnitt 13 besonders massiv ausgeführt werden kann, da eine Zentralbohrung zur Herausführung einer Drehwelle, wie sie beispielsweise im Stand der Technik gemäß der DE 200 11 452 U1 notwendig ist vermieden ist. Hierdurch ergibt sich auch die Möglichkeit, die Lagerwelle aus einem kostengünstigeren Material, z. B. Kunststoff anstelle Zink-Druckguss herzustellen, was zu einer weiteren Kostenreduzierung führt.

Schließlich ist von besonderem Vorteil, dass die erfindungsgemäße Wickelwelle in besonders einfacher Art und Weise vormontierbar und montierbar ist, wobei aufwendige Rundlaufprüfungen und gegebenenfalls Richtvorgänge bzw. Richttätigkeiten zur Wiederherstellung des erforderlichen Rundlaufs entfallen können.

### Bezugszeichen:

- 1: Wickelwelle
- 2: Wickelrohr
- 3: Mittellängsachse
- 4: erstes freies Ende
- 5: zweites freies Ende
- 6: Innenraum
- 7: Spiraltorsionsfeder
- 8: Lagerstopfen
- 9: Lagerzapfen
- 10: Lagerbuchse
- 11: Lagerstück
- 12: Lagerzapfen
- 13: Karosserieabschnitt
- 14: erste Befestigungseinrichtung
- 15: zweite Befestigungseinrichtung
- 16: Schubstück
- 17: Vorsprünge
- 18: Keilnuten
- 19: Innenseite von 2
- 20: Doppelpfeilrichtung
- 25: Lagerbügel
- 26: erster Lagersteg
- 27: zweiter Lagersteg
- 28: Verbindungssteg

## Patentansprüche

1. Wickelwelle für eine Rollvorrichtung, mit einem Wickelrohr (2) und einer Torsionsspanneinrichtung, welche mit einem ersten Ende (7a) mit dem Wickelrohr (2) relativ zu diesem verdrehbar gekoppelt ist und zumindest mit einem zweiten Ende mit dem Wickelrohr (2) relativ zu diesem drehfest und axial verschieblich gekoppelt ist, wobei die Torsionsspanneinrichtung eine Spiraltorsionsfeder (7) ist, **dadurch gekennzeichnet, dass** das zweite Ende der Spiraltorsionsfeder (7) direkt mit dem Wickelrohr (2) axial verschieblich und drehfest gekoppelt ist.

2. Wickelwelle nach Anspruch 1, **dadurch gekennzeichnet, dass** die Torsionsspanneinrichtung (7) sowohl im Bereich des ersten Endes (7a) als auch im Bereich des zweiten Endes (7b) axial verschieblich mit dem Wickelrohr (2) gekoppelt ist.

3. Wickelwelle nach einem der vorhergehenden Ansprüche, **dadurch gekennzeichnet, dass** die drehfeste und axial verschiebliche Kopplung über ein Keilwellenprofil, über ein Vielzahnprofil oder ein Polygonprofil erfolgt.

4. Wickelwelle nach einem der vorhergehenden Ansprüche, **dadurch gekennzeichnet, dass** die Torsionsspanneinrichtung (7) in einem Innenraum (6) der Wickelwelle (2) angeordnet ist.

5. Wickelwelle nach einem der vorhergehenden Ansprüche, **dadurch gekennzeichnet, dass** das Wickelrohr (2) als Strangguss- oder Extrusionsprofil, insbesondere aus Kunststoff oder Aluminium ausgebildet ist.

6. Wickelwelle nach Anspruch 3, **dadurch gekennzeichnet dass** die Torsionsspanneinrichtung (7) zumindest einendig derart aus einem gebogenen Federdraht ausgebildet ist, dass die Torsionsspanneinrichtung (7) endseitig direkt in dem Keilwellenpröfil, dem Vielzahnprofil oder einem entsprechenden Polygonprofil axial verschieblich und drehfest bezüglich dem Wickelrohr (2) gelagert ist.

7. Wickelwelle nach einem der vorhergehenden Ansprüche, **dadurch gekennzeichnet, dass** die bezüglich dem Wickelrohr (2) drehbare Lagerung der Torsionsspanneinrichtung (7) über ein Lagerstück (11) erfolgt, welches in einer Lagerbuchse (10) axialfest und drehbar gegenüber dem Wickelrohr (2) gelagert ist.

8. Wickelwelle nach Anspruch 7, **dadurch gekennzeichnet, dass** das Lagerstück (11) sich ein Stück über ein Ende des Wickelrohres (2) hinaus erstreckt und Mittel zum Befestigen an einen Karosseriebereich (13) besitzt oder dass das Lagerstück (11) Teil eines Karosseriebereichs ist.

9. Wickelwelle nach Anspruch 7 oder 8 in Verbindung mit Anspruch 3, **dadurch gekennzeichnet, dass** die Lagerbuchse (10) außenseitig im Vielzahn-, Keilwellen- oder Polygonprofil des Wickelrohres (2) gelagert ist und ein Gleitlager für das Lagerstück (11) bildet.

## Claims

1. Winding shaft for a roller blind device having a winding tube (2) and having a torsional tensioning device which is coupled with a first end (7a) to the winding tube (2) so as to be rotatable with respect to the latter and is coupled at least with a second end to the winding tube (2) so as to be rotationally fixed and axially movable with respect to the latter, with the torsional tensioning device being a spiral torsion spring (7), **characterized in that** the second end of the spiral torsion spring (7) is coupled directly to the winding tube (2) so as to be axially movable and rotationally fixed with respect to the latter.

2. Winding shaft according to Claim 1, **characterized in that** the torsional tensioning device (7) is coupled to the winding tube (2) in an axially movable manner both in the region of the first end (7a) and also in the region of the second end (7b).

3. Winding shaft according to either of the preceding claims, **characterized in that** the rotationally fixed and axially movable coupling takes place by means of a splined shaft profile, by means of a multi-tooth profile or a polygonal profile.

4. Winding shaft according to one of the preceding claims, **characterized in that** the torsional tensioning device (7) is arranged in an interior space (6) of the winding shaft (2).

5. Winding shaft according to one of the preceding claims, **characterized in that** the winding tube (2) is embodied as a continuously cast or extruded profile, in particular composed of plastic or aluminium.

6. Winding shaft according to Claim 3, **characterized in that** the torsional tensioning device (7) is formed at least at one end from a curved spring wire in such a way that the torsional tensioning device (7) is, at the end side, mounted directly in the splined shaft profile, in the multi-tooth profile or in a corresponding polygonal profile so as to be axially movable and rotationally fixed with respect to the winding tube (2).

7. Winding shaft according to one of the preceding claims, **characterized in that** the mounting of the torsional tensioning device (7) so as to be rotatable with respect to the winding tube (2) takes place by means of a bearing piece (11) which is mounted in a bearing sleeve (10) so as to be axially fixed and rotatable with respect to the winding tube (2).

8. Winding shaft according to Claim 7, **characterized in that** the bearing piece (11) extends a small distance beyond an end of the winding tube (2) and has means for fastening to a body region (13), or **in that** the bearing piece (11) is part of a body region.

9. Winding shaft according to Claim 7 or 8 in conjunction with Claim 3, **characterized in that** the bearing sleeve (10) is mounted at the outer side in a multi-tooth, splined shaft or polygonal profile of the winding tube (2), and forms a plain bearing for the bearing piece (11).

## Revendications

1. Arbre d'enroulement pour un système de store déroulant comprenant un tube d'enroulement (2) et un dispositif de contrainte de torsion, qui est accouplé par une première extrémité (7a) au tube d'enroulement (2) de manière rotative par rapport à celui-ci et est accouplé par au moins une deuxième extrémité au tube d'enroulement (2) de manière solidaire en rotation et coulissante axialement par rapport à celui-ci, le dispositif de contrainte de torsion étant un ressort de torsion spiral (7), **caractérisé en ce que** la deuxième extrémité du ressort de torsion spiral (7) est accouplée directement au tube d'enroulement (2) de manière coulissante axialement et solidaire en rotation.

2. Arbre d'enroulement selon la revendication 1, **caractérisé en ce que** le dispositif de contrainte de torsion (7) est accouplé au tube d'enroulement (2) à la fois dans la région de la première extrémité (7a) et dans la région de la deuxième extrémité (7b) de manière coulissante axialement.

3. Arbre d'enroulement selon l'une quelconque des revendications précédentes, **caractérisé en ce que** l'accouplement solidaire en rotation et coulissant axialement s'effectue par le biais d'un profil cannelé, d'un profil dentelé ou d'un profil polygonal.

4. Arbre d'enroulement selon l'une quelconque des revendications précédentes, **caractérisé en ce que** le dispositif de contrainte de torsion (7) est disposé dans un espace interne (6) de l'arbre d'enroulement (2).

5. Arbre d'enroulement selon l'une quelconque des revendications précédentes, **caractérisé en ce que** le tube d'enroulement (2) est réalisé sous forme de profilé filé ou extrudé, notamment en plastique ou en aluminium.

6. Arbre d'enroulement selon la revendication 3, **caractérisé en ce que** le dispositif de contrainte de torsion (7) est réalisé au moins à une extrémité à partir d'un fil de ressort courbé de telle sorte que le dispositif de contrainte de torsion (7) soit supporté du côté de l'extrémité directement dans le profil cannelé, le profil dentelé ou un profil polygonal correspondant de manière coulissante axialement et solidaire en rotation par rapport au tube d'enroulement (2).

7. Arbre d'enroulement selon l'une quelconque des revendications précédentes, **caractérisé en ce que** le support sur palier rotatif du dispositif de contrainte de torsion (7) par rapport au tube d'enroulement (2) s'effectue par le biais d'une pièce de palier (11) qui est montée dans une douille de palier (10) de manière fixe axialement et rotative par rapport au tube d'enroulement (2).

8. Arbre d'enroulement selon la revendication 7, **caractérisé en ce que** la pièce de palier (11) s'étend un peu au-delà d'une extrémité du tube d'enroulement (2) et possède des moyens pour la fixer à une région de la carrosserie (13) ou **en ce que** la pièce de palier (11) fait partie d'une région de carrosserie.

9. Arbre d'enroulement selon la revendication 7 ou 8 en relation avec la revendication 3, **caractérisé en ce que** la douille de palier (10) est montée du côté extérieur dans un profil dentelé, cannelé ou polygonal du tube d'enroulement (2) et forme un palier lisse pour la pièce de palier (11).
